# EUROPEAN PATENT APPLICATION

(11) **EP 4 715 455 A1**
(43) Date of publication of application: **25.03.2026**
(21) Application number: 24807170.6
(22) Date of filing: 10.05.2024
(51) Int. Cl.: G02C 13/00

(54) **OPTICAL MEMBER MANUFACTURING METHOD, AND OPTICAL MEMBER MANUFACTURING SYSTEM**

(30) Priority: 15.05.2023 JP 2023080393
(71) Applicant: Hoya Lens Thailand Ltd., Pathumthani 12130 (TH)
(72) Inventor: OOKUBO Shigeki, Tokyo 160-8347 (JP)
(74) Representative: Betten & Resch
(86) International application number: PCT/JP2024/017530
(87) International publication number: WO 2024/237218

(57) **Abstract**

There is provided an optical member manufacturing method, which is a method for manufacturing an optical member having a decorative pattern formed on an optical surface, the method including: obtaining shape data that specifies an outer shape of the optical member and design pattern data that specifies a decorative pattern to be arranged within the outer shape (S206); measuring a three-dimensional shape of a surface to be treated of a base material that is a base of the optical member (S207); irradiating the surface to be treated of the substrate with laser beam to form a decorative pattern (S208); and processing the outer shape of the base material (S209), wherein the measurement of the three-dimensional shape of the base material, the formation of the decorative pattern, and the processing of the outer shape are performed while maintaining a base material supporting state by a jig block that supports the base material, and position control for forming the decorative pattern and position control for processing the outer shape are performed while a reference point set in a common coordinate system of the shape data and the design pattern data coincides with a reference point of the jig block that is in the base material supporting state.

## Description

### Technical Field

The present invention relates to an optical member manufacturing method and an optical member manufacturing system.

### Background Art

For a spectacle lens, which is a type of an optical member, a decorative pattern such as a logo and house mark may be formed on an optical surface by irradiating it with laser beam (see, for example, Patent literature 1).

### Citation List

### Patent Literature

[Patent literature 1] JP 2022-7102 A

### Summary of Invention

### Technical Problem

Generally, in the manufacturing process of spectacle lenses, a store and a factory exchange necessary data such as wearer's prescription information, a lens specification to be applied, a frame shape, etc., to manufacture a desired spectacle lens.

On the other hand, when decorating the optical surface of the spectacle lens for decorative or display purposes, new data handling for the decoration process is required. Such decorative data does not directly affect the primary function of the spectacle lens, which is to correct refractive power or ensure comfortable vision for the wearer, but creates a new value for the product as an appearance function through its decoration and display.

Therefore, in the manufacture of the spectacle lens, it is becoming recognized that how to match decoration data to known data handling and obtain a decorated lens with excellent appearance performance and high shape and positional accuracy without compromising productivity, is a very important issue.

The present invention provides a technique of forming a desired decorative pattern with high precision at an appropriate position on an optical surface of an optical member.

### Solution to Problem

A first aspect of the present invention is an optical member manufacturing method, which is a method for manufacturing an optical member having a decorative pattern formed on an optical surface, the method comprising:
obtaining shape data that specifies an outer shape of the optical member and design pattern data that specifies a decorative pattern to be arranged within the outer shape;
measuring a three-dimensional shape of a surface to be treated of a base material that is a base of the optical member;
irradiating the surface to be treated of the base material with laser beam in accordance with position control based on the design pattern data while adjusting focus in accordance with a measurement result of the three-dimensional shape, thereby forming the decorative pattern on the surface to be treated; and
processing an outer shape of the base material in accordance with position control based on the shape data, thereby forming the base material into the outer shape of the optical member;
wherein the measurement of the three-dimensional shape of the base material, the formation of the decorative pattern, and the processing of the outer shape are performed while maintaining a base material supporting state by a jig block that supports the base material, and
position control for forming the decorative pattern and position control for processing the outer shape are performed while a reference point set in a common coordinate system of the shape data and the design pattern data coincides with a reference point of the jig block that is in the base material supporting state.

A second aspect of the present invention is the optical member manufacturing method according to the first aspect, wherein the reference point in the common coordinate system is used to position the decorative pattern with respect to the outer shape.

A third aspect of the present invention is the optical member manufacturing method according to the first aspect, wherein the surface to be treated is irradiated with laser beam via a telecentric optical system.

A fourth aspect of the present invention is the optical member manufacturing method according to any one of the first to third aspects, wherein the decorative pattern is formed by removing a part of a surface layer portion of the surface to be treated by irradiation of the laser beam.

A fifth aspect of the present invention is the optical member manufacturing method according to the fourth aspect, wherein the surface layer portion is composed of an optical film with a multilayer structure.

A sixth aspect of the present invention is the optical member manufacturing method according to the fourth aspect, wherein the decorative pattern is formed by non-heat processing using irradiation of a short pulse laser beam.

A seventh aspect of the present invention is the optical member manufacturing method according to the first aspect, wherein the optical member is a spectacle lens.

An eighth aspect of the present invention is an optical member manufacturing system, which is an optical member manufacturing system used to manufacture an optical member having a decorative pattern formed on its optical surface, the system comprising:
a jig block that supports a base material that is a base of the optical member;
a data acquisition unit that obtains shape data that specifies an outer shape of the optical member and design pattern data that specifies the decorative pattern to be arranged within the outer shape;
a three-dimensional measuring unit that measures a three-dimensional shape of a surface to be treated of the base material;
a laser processing unit that irradiates the surface to be treated of the base material with laser beam in accordance with position control based on the design pattern data while adjusting focus in accordance with a measurement result of the three-dimensional shape, thereby forming the decorative pattern on the surface to be treated; and
a shape processing unit that processes an outer shape of the base material in accordance with the position control based on the shape data, thereby forming the base material into the outer shape of the optical member,
wherein the measurement of the three-dimensional shape of the base material, the formation of the decorative pattern, and the processing of the outer shape are performed while maintaining a base material supporting state by a jig block that supports the base material, and
position control for forming the decorative pattern and position control for processing the outer shape are performed while a reference point set in a common coordinate system of the shape data and the design pattern data coincides with a reference point of the jig block that is in the base material supporting state.

### Advantageous Effects of Invention

According to the present invention, a desired decorative pattern can be formed with high precision at an appropriate position on an optical surface of an optical member.

### Brief Description of Drawings

[FIG. 1] FIG. 1 is a plan view showing a specific example of a spectacle lens according to one embodiment of the present invention.
[FIG. 2] FIG. 2 is a block diagram showing a functional configuration example of a spectacle lens manufacturing system according to one embodiment of the present invention.
[FIG. 3] FIG. 3 is a flow chart showing an example of a procedure of a spectacle lens manufacturing method according to one embodiment of the present invention.
[FIG. 4] FIG. 4 is an explanatory view (part 1) showing an arrangement example of a decorative pattern according to one embodiment of the present invention.
[FIG. 5] FIG. 5 is an explanatory view (part 2) showing an arrangement example of the decorative pattern according to one embodiment of the present invention.

### Description of Embodiments

Hereinafter, an embodiment of the present invention will be described with reference to the drawings.

### (1) Overview of spectacle lens

In this embodiment, the following description will be given taking as an example a case where the optical member is a spectacle lens.

A spectacle lens has an object-side surface and an eyeball-side surface as optical surfaces. The "object-side surface" is the surface that is located on the object side when spectacles equipped with spectacle lenses are worn by a wearer. The "eyeball-side surface" is the opposite, that is located on the eyeball side when spectacles equipped with spectacle lenses are worn by a wearer. Generally, the object-side surface is a convex surface and the eyeball-side surface is a concave surface, that is, spectacle lenses are meniscus lenses.

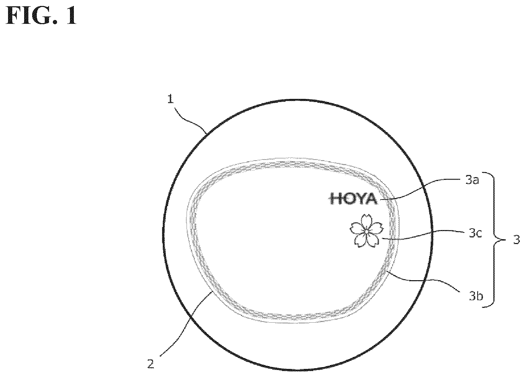

FIG. 1 is a plan view showing a specific example of a spectacle lens according to this embodiment.

In this embodiment, a base material (hereinafter also referred to as an "uncut lens") 1 having a circular shape in a plan view (for example, having an outer diameter of 60 to 80 mm) is processed to have its outer shape (this is also known as edging or frame cutting) matched to a frame shape of a spectacle frame worn by the wearer, thereby producing a spectacle lens having an outer shape 2 corresponding to the frame shape.

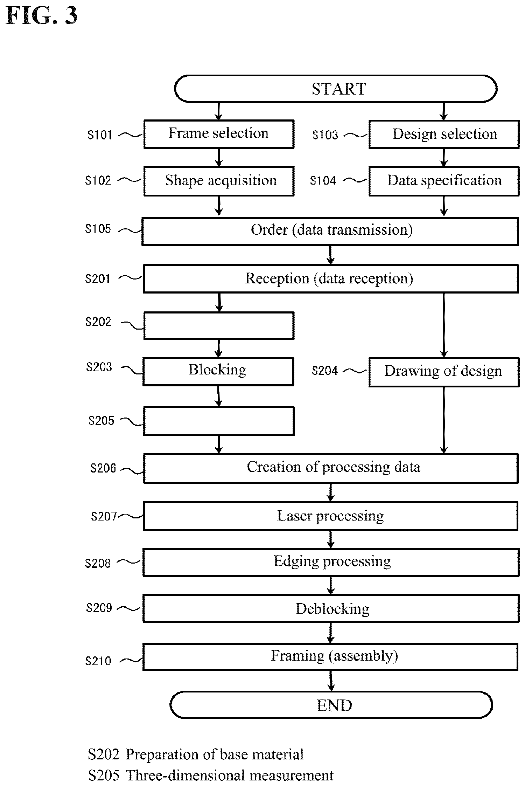

Further, in this embodiment, a decorative pattern 3 is arranged on the optical surface of the spectacle lens (at least one of the object-side surface and the eyeball-side surface) at a predetermined position within a range of the outer shape 2 of the spectacle lens after edging. The decorative pattern 3 is composed of letters, figures, symbols, or a combination thereof, thereby decorating or displaying information on the spectacle lens. Specifically, examples of the decorative pattern 3 include a sign 3a such as a logo or house mark indicating an origin of the spectacle lens, a pattern figure 3b imitating a spectacle frame (rim), or an icon figure 3c corresponding to a decorative pattern. In addition, any other characters, such as a marking relating to the quality or grade of the spectacle lens as a product, wearer's name, nickname, or portrait, can be applied. The decorative pattern 3 may be a suitable combination of these. In any one of the above cases, the decorative pattern 3 is arranged at a predetermined position within the outer shape 2 of the spectacle lens, but this predetermined position only needs to be determined in advance and is not limited to a specific position. However, the precision of the position and angle of the decorative pattern 3 within the small area of the spectacle lens has a significant impact on the appearance of the product, so it is desirable that the decorative pattern 3 be precisely arranged to show a predetermined design. Particularly, when the decorative pattern 3 is in contact with the edge of the outer shape 2 of the spectacle lens, or when the decorative pattern 3 is positioned at a distance of 2 mm (or 1 mm) or less from the edge, the misalignment is easily noticeable, and therefore high positional accuracy is required to avoid compromising an appearance quality. Further, the decorative pattern 3 can provide a desired decorative and display effects whether it is arranged on the object-side surface or the eyeball-side surface. However, when considering the ease of blocking (described later) and ensuring the function of an optical film (described later) against external light, it is more preferable to arrange it on the eyeball-side surface.

The uncut lens 1 that forms the base of such a spectacle lens is constituted by laminating optical films such as a hard coat film (HC film) and an anti-reflection film (AR film) on at least one optical surface, preferably both optical surfaces, of a lens base material composed of a resin material or the like.

Then, as will be explained in detail later, by performing laser irradiation processing with a predetermined beam diameter to impart energy to the optical surface, a part of the surface layer of the optical surface is removed, and the surface properties (light reflectivity, surface roughness) of the removed part and the unremoved part are made different, thereby forming the above-described decorative pattern 3. For example, when the optical film is laminated on the optical surface, by using laser irradiation processing to remove some layers of the multi-layered optical film (for example, some layers of an AR film), differences occur in the reflectance and wavelength range of a visible light compared to the remaining part that is not removed, which results in differences in brightness and color tone, etc. Thereby, the decorative pattern 3 becomes visible. That is, the decorative pattern 3 is marked on the spectacle lens by using laser irradiation processing.

### (2) Configuration of spectacle lens manufacturing system

Next, a spectacle lens manufacturing system used to manufacture the spectacle lens having the decorative patterns 3 formed on its optical surface will be specifically described. The spectacle lens manufacturing system given as an example here corresponds to one embodiment of the optical member manufacturing system according to the present invention.

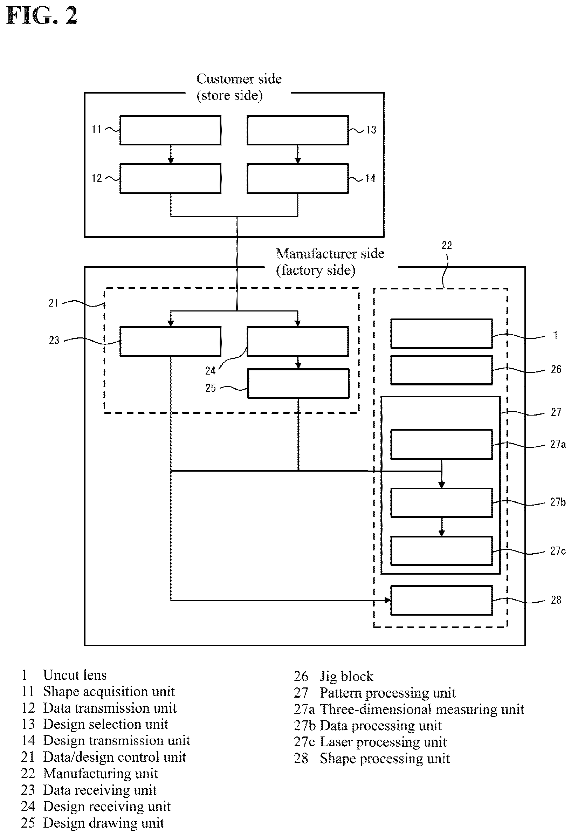

FIG. 2 is a block diagram showing a functional configuration example of the spectacle lens manufacturing system according to this embodiment.

The spectacle lens manufacturing system according to this embodiment may be configured to include components used on a customer side (store side) that orders spectacle lenses, and components used on a manufacturer side (factory side) that manufactures spectacle lenses. Alternatively, the manufacturer may have the system. An example of such a system will be described below.

The components on the store side include a shape acquisition unit 11, a data transmission unit 12, a design selection unit 13, and a design transmission unit 14. These components may be provided in each of a plurality of stores.

The factory-side components can be broadly divided into a data/design control unit 21 and a manufacturing unit 22. The data/design control unit 21 has a data receiving unit 23, a design receiving unit 24, and a design drawing unit 25. The manufacturing unit 22 includes a jig block 26, a pattern processing unit 27, and a shape processing unit 28.

Each of these components, including the store side and the factory side, will be explained below in order.

The shape acquisition unit 11 acquires three-dimensional data relating to a rim shape of a spectacle frame selected by a wearer of the spectacles. The rim shape of the spectacle frame corresponds to the outer shape 2 of the spectacle lens to be fitted to the spectacle frame. Therefore, the shape acquisition unit 11 acquires shape data, which is three-dimensional data that specifies the outer shape 2 of the spectacle lens. The shape acquisition unit 11 can acquire data by using, for example, a frame tracer that measures the rim shape of the spectacle frame. When the spectacle frame is a so-called rimless frame, shape data specifying the outer shape 2 of the lens can be obtained based on a rimless lens design.

The data transmission unit 12 transmits the shape data acquired by the shape acquisition unit 11 to a data receiving unit 23 on the factory side. The data transmission unit 12 may transmit spectacle lens ordering information (e.g., prescription information such as a wearer's prescription power, personal parameters of the wearer, lens specification information such as a lens material and coating type, and other information related to order contents) along with the shape data. There is no particular limitation in a communication line or communication protocol used for data transmission.

The design selection unit 13 selects the decorative pattern 3 that the spectacle wearer desires to be arranged within the range of the outer shape 2 of the spectacle lens. That is, the design selection unit 13 selects design pattern data, which is two-dimensional data that specifically specifies the decorative pattern 3. The design selection unit 13 performs data selection, for example, through the following procedure: a plurality of pre-set decorative patterns 3 are displayed to a spectacle wearer to allow him/her to select a desired one. It is also acceptable to prepare two-dimensional data of the decorative pattern 3 desired by the wearer.

The design transmission unit 14 transmits the design pattern data selected by the design selection unit 13 to the factory-side design receiving unit 24. The communication line and communication protocol for transmitting data are the same as those of the data transmission unit 12 and are not particularly limited.

The data receiving unit 23 receives the shape data transmitted from the store-side data transmission unit 12. The data receiving unit 23 may receive spectacle lens ordering information together with the shape data. When data is transmitted from a plurality of stores, the data receiving unit 23 receives the shape data etc., in a manner that allows the source of the data to be identified.

The design receiving unit 24 receives the design pattern data transmitted from the store-side design transmission unit 14. When data is transmitted from a plurality of stores, the design receiving unit 24 receives the design pattern data in a manner that allows the transmission source to be identified.

In this way, the data receiving unit 23 receives shape data, and the design receiving unit 24 receives design pattern data. Therefore, the data/design control unit 21 having the data receiving unit 23 and the design receiving unit 24 functions as a data acquisition unit that obtains shape data and design pattern data. The data acquisition unit may be considered to include the shape acquisition unit 11, data transmission unit 12, design selection unit 13, and design transmission unit 14 in addition to the data/design control unit 21.

Based on the shape data obtained by the data receiving unit 23 and the design pattern data obtained by the design receiving unit 24, the design drawing unit 25 determines
(i) the shape of the spectacle lens outer shape 2,
(ii) the position within the outer shape 2, and
(iii) the design of the decorative pattern 3 to be arranged. The design drawing unit 25 performs this determination process using a data coordinate system (hereinafter also referred to as a "common coordinate system") that is commonly applicable to both the shape data and the design pattern data, with a reference point (for example, a point corresponding to a boxing center of the spectacle frame) set in the common coordinate system as a reference. The determination process performed by the design drawing unit 25 will be described in detail later.

The jig block 26 supports the uncut lens 1 that serves as the base of the spectacle lens. More specifically, in the manufacture of the spectacle lens, the jig block 26 is configured to support (block) the uncut lens 1 that serves as the base for the spectacle lens, and is also configured to be able to release (deblock) the support for the spectacle lens after the lens has been manufactured. The jig block 26 is configured to support the uncut lens 1 in a state where a predetermined reference point (e.g., a jig center point) on the jig block 26 coincides with a predetermined reference point (e.g., an optical center point) in the uncut lens 1. Thereby, in a state where the jig block 26 supports the uncut lens 1 (hereinafter also referred to as a "base material supporting state"), the reference point of the uncut lens 1 supported by the jig block 26 can be specified by specifying the reference point of the jig block 26.

The pattern processing unit 27 is the unit that forms the decorative pattern 3 on the uncut lens 1 supported by the jig block 26, the decorative pattern 3 being specified by the design pattern data obtained by the design receiving unit 24. For this purpose, the pattern processing unit 27 is configured to include a three-dimensional measuring unit 27a, a data processing unit 27b, and a laser processing unit 27c.

The three-dimensional measuring unit 27a measures a three-dimensional shape of a processing area of the surface to be treated of the uncut lens 1, while the uncut lens 1 is supported by the jig block 26. The surface to be treated of the uncut lens 1 is the optical surface on which the decorative pattern 3 will be formed. The three-dimensional shape may be measured using a known technique, such as using a laser displacement meter or a linear gauge.

The data processing unit 27b processes the design pattern data obtained by the design receiving unit 24 so as to match the result of the three-dimensional shape measurement by the three-dimensional measuring unit 27a. More specifically, the data processing unit 27b grasps the surface shape (specifically, for example, the curvature of a curved surface) of the surface to be treated of the uncut lens 1 based on the measurement result of the three-dimensional shape by the three-dimensional measuring unit 27a, and then projects design pattern data, which is two-dimensional data, onto the three-dimensional surface shape, to create processing data, which is three-dimensional data that is matched to the surface shape.

The laser processing unit 27c irradiates the surface to be treated of the uncut lens 1 supported by the jig block 26 with laser beam, thereby forming the decorative pattern 3 on the surface to be treated. More specifically, the laser processing unit 27c forms the decorative pattern 3 by performing non-thermal processing by irradiating the surface to be treated of the uncut lens 1 with a pulse laser beam (for example, a picosecond short pulse laser or a femtosecond ultrashort pulse laser). The laser processing unit 27c is configured to perform irradiation of the laser beam in this manner via a telecentric optical system. Through such laser beam irradiation, the laser processing unit 27c performs focus adjustment and position control using processing data obtained from the data processing unit 27b. That is, the laser processing unit 27c performs focus adjustment in accordance with a measurement result of the three-dimensional shape measured by the three-dimensional measuring unit 27a, and irradiates the surface to be treated of the uncut lens 1 with the laser beam in accordance with position control based on the design pattern data obtained by the design receiving unit 24, thereby forming the decorative pattern 3 on the surface to be treated.

The shape processing unit 28 performs edging processing (frame cutting processing) on the uncut lens 1 supported by the jig block 26 so that the shape of the uncut lens 1 corresponds to the outer shape 2 of the spectacle lens. The shape processing unit 28 performs edging processing on the uncut lens 1 in accordance with position control based on the shape data obtained by the data receiving unit 23.

Of the components described above, the data transmission unit 12, design selection unit 13, design transmission unit 14, data receiving unit 23, design receiving unit 24, design drawing unit 25 and data processing unit 27b can be realized by utilizing a computer device that combines hardware resources such as a CPU (Central Processing Unit), RAM (Random Access Memory), ROM (Read Only Memory), etc., and specifically executing information processing based on a predetermined program (software) using the computer device.

The shape acquisition unit 11 can be realized by, for example, a frame tracer or a computer device. The three-dimensional measuring unit 27a can be realized by using, for example, a three-dimensional measuring device or an equivalent device. The laser processing unit 27c can be realized by using, for example, a laser processing machine that performs laser irradiation processing. The shape processing unit 28 can be realized by using an edging processing machine that processes the outer shape of the spectacle lens.

### (3) Manufacturing procedure for spectacle lens

Next, the manufacturing procedure for the spectacle lens performed using the spectacle lens manufacturing system configured as described above will be specifically described, focusing particularly on the procedure for forming the decorative pattern 3. The manufacturing procedure for the spectacle lens given as an example here corresponds to one embodiment of the manufacturing method for the optical member according to the present invention.

FIG. 3 is a flow chart showing an example of the procedure of the spectacle lens manufacturing method according to this embodiment.

In the manufacture of the spectacle lens, prior to the manufacture of the spectacle lens, when a customer side (store side) first selects a desired spectacle frame (step 101; hereafter, step will be abbreviated as "S"), shape data on the rim shape of the selected spectacle frame is obtained by the shape acquisition unit 11 (S102). Shape data can be obtained, for example, by using a frame tracer that measures the rim shape of the spectacle frame, or in the case of a rimless frame, by tracing a lens shape based on a lens design. In addition to obtaining the shape data, which is three-dimensional data, the shape acquisition unit 11 may also obtain two-dimensional data by projecting the shape data onto a two-dimensional plane (i.e., two-dimensional data that specifies the rim shape when viewed in a plane).

At the store side, based on the selection result of the decorative pattern 3 desired by the wearer (S103), the design selection unit 13 specifies design pattern data, which is two-dimensional data for specifying the decorative pattern 3 (S104). This design pattern data specifies which lens shape, at which position, and which design type of the decorative pattern 3 is to be arranged. The decorative pattern 3 that serves as the base of the design pattern data may be selected, for example, through the following procedure: multiple pre-set decorative patterns 3 with different designs are prepared to allow the wearer to select the one they desire. However, it is not necessary to go through such a procedure, and other method (for example, custom-made in which the wearer decides the design) may also be used.

Then, the store side places an order for the spectacle lens in accordance with a wearer's desire (S105). Specifically, order information for the spectacle lens (for example, prescription information for the wearer, lens specification information, and other information related to the order) is sent to a manufacturer side (factory side). At this time, along with the transmission of the order information, the following data is also transmitted: the shape data obtained by the shape acquisition unit 11 (including two-dimensional data of the rim shape, if any) is transmitted from the data transmission unit 12 to the factory side. Further, the design transmission unit 14 transmits the design pattern data selected by the design selection unit 13 to the factory side.

On the other hand, the manufacturer side (factory side) receives the contents transmitted from the store side (S201), accepts the order from the store side, and starts manufacturing the spectacle lens in accordance with the order contents.

The factory side, first, prepares the uncut lens 1 that will be the base of the spectacle lens (S202). Specifically, the uncut lens 1 is prepared, which is made by laminating an optical film such as an HC film or an AR film on the optical surface of the lens base material, and this uncut lens 1 is the object to be treated in the steps described below. The uncut lens 1 may be a so-called semi-finished lens, and multiple types of the uncut lens 1 may be manufactured in advance. From the multiple types, a lens that corresponds to the order contents (e.g., prescription information) may be selected, and the selected lens may be used as the object to be treated.

After the uncut lens 1 is prepared, one optical surface of the uncut lens 1 (for example, the optical surface that is not subjected to laser processing, which will be described later) is attached to the jig block 26. At this time, the uncut lens 1 is attached to the jig block 26 so that a predetermined reference point (e.g., the jig center point) on the jig block 26 coincides with a predetermined reference point (e.g., the optical center point) on the uncut lens 1. Thereby, the uncut lens 1 is supported (blocked) by the jig block 26 while being positioned relative to the jig block 26 (S203). Hereinafter, the state where the uncut lens 1 is supported by the jig block 26 will also be referred to as a "base material supporting state."

Further, at the factory side, when an order is received from the store side (S201), based on the shape data obtained by the data receiving unit 23 and the design pattern data obtained by the design receiving unit 24, the design drawing unit 25 determines
(i) the shape of the spectacle lens outer shape 2,
(ii) the position within the outer shape 2, and
(iii) the design of the decorative pattern 3 to be arranged (S204).

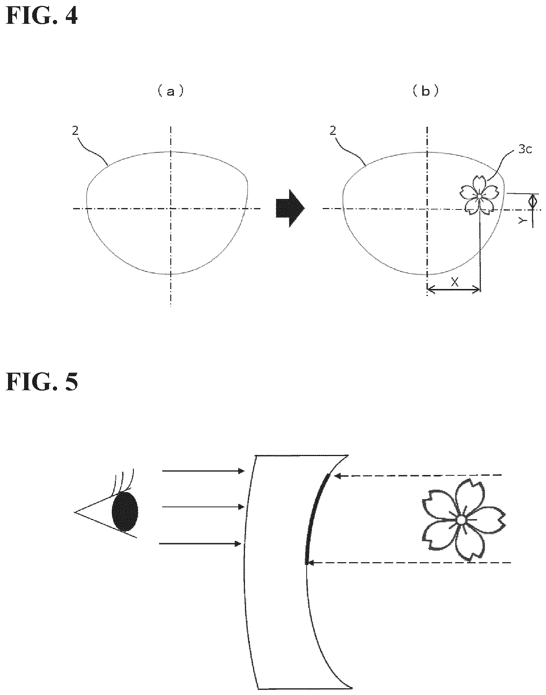

Here, the processing operation performed by the design drawing unit 25 will be described using a specific example. FIGS. 4 and 5 are explanatory views showing arrangement examples of the decorative pattern 3. FIG. 4 and FIG. 5 show the case where the decorative pattern 3 to be arranged is an icon graphic 3c.

First, the design drawing unit 25 assumes a predetermined two-dimensional coordinate space (hereinafter also referred to as a "common coordinate system") that is commonly used for both the shape data and the design pattern data.

Then, the design drawing unit 25 expands the shape data obtained by the data receiving unit 23 into a common coordinate system (see FIG. 4(a)). At this time, when the two-dimensional data is obtained from the store side, the two-dimensional data being obtained by projecting shape data, which is three-dimensional data, onto a two-dimensional plane, this two-dimensional data may be expanded into a common coordinate system. Further, when the shape data obtained from the store side is three-dimensional data, the three-dimensional data may be projected onto the common coordinate system and expanded into that common coordinate system. The expansion into the common coordinate system is performed based on a reference point set in the common coordinate system, such as the boxing center of the spectacle frame (or the boxing center of the spectacle lens in the case of the rimless spectacles). Thereby, in the common coordinate system, the planar shape of the outer shape 2 of the spectacle lens is specified when the reference point is used as the reference.

Further, the design drawing unit 25 expands the design pattern data obtained by the design receiving unit 24 into the common coordinate system (see FIG. 4(b)). The expansion into the common coordinate system is performed using the reference point set in the common coordinate system as a reference. For example, when the boxing center is used as the reference point, the decorative pattern 3 (e.g., the icon figure 3c) of the type specified by the design pattern data is positioned and arranged at a position from the boxing center in accordance with the XY coordinate values specified by the design pattern data. The position from the reference point (size of XY coordinate values) may be defined in advance for each type of decorative pattern 3 in the design pattern data, but may also be set appropriately as needed. By expanding into such a common coordinate system, the relative position (arrangement) of the decorative pattern 3 (e.g., icon figure 3c) with respect to the outer shape 2 of the spectacle lens is determined in the common coordinate system, using the reference point as a reference.

That is, the design drawing unit 25 determines the relative position of the decorative pattern 3 (e.g., icon figure 3c) with respect to the outer shape 2 of the spectacle lens on the data by combining the shape data and the design pattern data while using the reference point set in the common coordinate system as a reference.

Determining the relative position based on such data is highly advantageous in terms of arranging the decorative pattern 3 at an appropriate position on the optical surface of the spectacle lens (specifically, at a predetermined position within the range of the outer shape 2), and is also advantageous in terms of ensuring the positional accuracy of the relative position of the decorative pattern 3 with respect to the outer shape 2. Therefore, the arrangement of the decorative pattern 3 is not only considered from the viewpoint of not interfering with a wearer's field of vision and enhancing an aesthetic appeal of the design when the spectacles are viewed from the outside, but also allows consideration to be given to the relative position with respect to the outer shape 2 of the spectacle lens, which is particularly useful when the decorative pattern 3 is a pattern figure 3b that imitates the spectacle frame (rim).

Separately from the processing operation by the design drawing unit 25 described above (i.e., in parallel with the processing operation, or before or after the processing operation), at the factory side, the three-dimensional measuring unit 27a measures the three-dimensional shape of the processing area of the surface to be treated of the uncut lens 1 blocked by the jig block 26 (S205). At this time, the three-dimensional measuring unit 27a performs three-dimensional shape measurement of the uncut lens 1 while maintaining the base material supported by the jig block 26 positioned using a predetermined reference point (for example, the jig center point). Therefore, since the reference point of the jig block 26 coincides with a predetermined reference point (e.g., the optical center point) of the uncut lens 1, the measurement result obtained by the three-dimensional measuring unit 27a can be used to specify the relationship of the uncut lens 1 with respect to the reference point.

After the design drawing unit 25 determines the arrangement of the decorative pattern 3 and the three-dimensional measuring unit 27a performs three-dimensional shape measurement, subsequently, the data processing unit 27b creates processing data based on the determination result (S206). The processing data is the data required for the laser processing unit 27c to perform laser processing. The processing data is created by projecting the design pattern data on the surface shape of the surface to be treated of the uncut lens 1 based on the measurement result of the three-dimensional shape by the three-dimensional measuring unit 27a (see FIG. 5). Therefore, according to the created processing data, the decorative pattern 3 specified by the design pattern data is arranged in a state matched to the surface shape (i.e., three-dimensional shape) of the surface to be treated of the uncut lens 1. At this time, by linking the reference point (e.g., the boxing center) for the design pattern data with the reference point (e.g., the optical center point of the uncut lens 1) for the three-dimensional shape measurement result, even when the decorative pattern 3 is matched to the surface shape of the surface to be treated of the uncut lens 1, the decorative pattern 3 can be arranged at an appropriate position, and the positional accuracy of the arrangement can be sufficiently ensured.

When the data processing unit 27b creates the processing data, the laser processing unit 27c irradiates the surface to be treated of the uncut lens 1 supported by the jig block 26 with the laser beam, thereby forming the decorative pattern 3 on the processing surface (S207).

At this time, the laser processing unit 27c preferably performs non-heating processing on the surface to be treated of the uncut lens 1 by irradiating it with a short-pulse laser beam.

In this embodiment, the short pulse laser includes, for example, lasers having a pulse width of 0.1 picoseconds or more and less than 100 picoseconds, preferably lasers having a pulse width of 0.1 picoseconds or more and 30 picoseconds or less, and more preferably lasers having a pulse width of 0.1 picoseconds or more and 15 picoseconds or less. The lower limit of the pulse width is not particularly limited as long as it exceeds 0 femtoseconds, but as described above, for example, a pulse width of 0.1 picoseconds or more (including a pulse width of 1 picosecond or more) can be suitably used. The wavelength of the short pulse laser is preferably, for example, 355 nm THG (Third Harmonic Generation) or 532 nm SHG (Second Harmonic Generation). However, the short pulse laser is not limited thereto, and may be, for example, a fundamental wavelength of 1064 nm or a fourth harmonic generation (FHG) of 266 nm. The pulse energy of the short pulse laser is, for example, 0.1 µJ or more and 30 µJ or less (maximum approximately 60 µJ) at 50 kHz. More preferably, the pulse energy is 0.5 to 10 µJ, and even more preferably, it is 1 to 6 µJ. The beam diameter of the short pulse laser is, for example, 10 µm or more and 30 µm or less. Similarly, the processing diameter per pulse can also be 10 µm or more and 30 µm or less. However, since a large processing diameter shortens the processing time and improves production efficiency, the processing diameter of about 500 µm may be applied depending on the design pattern shape. Depending on the resolution of the pattern to be obtained, the processing diameter can be smaller, to about 50 µm, 30 µm, or 20 µm.

By irradiating the surface to be treated of the uncut lens 1 with such a short-pulse laser beam, non-heat processing is performed on the surface due to the short-pulse laser beam. The non-heating processing, also known as ablation processing, is a technique of performing processing without heating by utilizing a multiphoton absorption phenomenon of the short-pulse laser. More specifically, the non-heat processing is a removal processing which minimizes the effect of heat around a processing area, and by which even materials that only melt at a very high temperature under an atmospheric pressure are removed by instantly melting, evaporating, and scattering the area irradiated with laser beam. With this type of non-heating processing, the molten parts are instantly evaporated, scattered, and removed, so there is little thermal impact on the surrounding area of the treated part, and processing can be performed with minimal thermal damage (such as deformation due to heat).

When the non-thermal processing is performed by irradiation of the short pulse laser beam, in the surface to be treated of the uncut lens 1, some layers of the multilayered optical film that constitute the surface to be treated are partially removed in a pattern shape corresponding to the decorative pattern 3, exposing the optical film located in the underlying layer. Thereby, the decorative pattern 3 is marked on the surface to be treated of the uncut lens 1. In this way, the decorative pattern 3 is formed by removing some layers of the optical film, which allows the decorative pattern 3 to be formed while preventing the function of the optical film from being significantly impaired. Further, since the marking is the non-heating processing, the thermal impact on the surrounding area of the treated part is small, and thermal damage can be suppressed. That is, by performing the non-heating processing, the decorative pattern 3 can be formed while suppressing damage to the optical film on the surface to be treated of the uncut lens 1.

The laser processing unit 27c performs such irradiation of the laser beam while maintaining the base material supporting state by the jig block 26. That is, the laser processing unit 27c irradiates the surface to be treated of the uncut lens 1 with laser beam while remaining positioned and fixed to the jig block 26, just as when the three-dimensional shape is measured by the three-dimensional measuring unit 27a. Therefore, the three-dimensional shape measurement by the three-dimensional measuring unit 27a and the laser beam irradiation by the laser processing unit 27c prevent any deviation from occurring in the positional relationship between the uncut lens 1 and the jig block 26.

Further, the laser processing unit 27c performs such a laser light irradiation based on the processing data created by the data processing unit 27b. As described above, the processing data is created by projecting the design pattern data. Therefore, based on the processing data, the laser processing unit 27c performs irradiation of the laser beam in accordance with position control based on the design pattern data that constitutes the processing data, thereby forming the decorative pattern 3 on the surface to be treated of the uncut lens 1.

At this time, the laser processing unit 27c performs position control for laser beam irradiation (i.e., position control when forming the decorative pattern 3) while the reference point (e.g., the boxing center) set in the common coordinate system of the shape data and design pattern data coincides with the reference point of the jig block 26 that is in the substrate supporting state (e.g., jig center point = lens optical center point). Therefore, the irradiation position of the laser beam on the surface to be treated of the uncut lens 1 (i.e., the formation position of the decorative pattern 3) is arranged at an appropriate position on the surface to be treated, and the positional accuracy of the relative position with respect to the outer shape 2 of the spectacle lens is sufficiently ensured.

Further, the processing data used by the laser processing unit 27c during irradiation of the laser beam reflects the measurement result of the three-dimensional shape by the three-dimensional measuring unit 27a. Therefore, based on the processing data, the laser processing unit 27c can irradiate the surface to be treated of the uncut lens 1 with laser beam while adjusting focus in accordance with the measurement result of the three-dimensional shape of the surface to be treated. That is, in addition to the position control based on the design pattern data, the laser processing unit 27c performs adjustment of focus in accordance with the three-dimensional shape of the surface to be treated of the uncut lens 1. By undergoing such a focus adjustment, even when the surface to be treated of the uncut lens 1 is a three-dimensional curved surface, the decorative pattern 3 is formed at an appropriate position that is matched to the surface shape.

As described above, the laser processing unit 27c performs focus adjustment in accordance with the measurement result of the three-dimensional shape, and performs irradiation of the laser beam in accordance with position control based on the design pattern data, thereby forming the decorative pattern 3 on the surface to be treated of the uncut lens 1 (see FIG. 5). Then, when irradiating the laser beam, position control is performed while the reference point (e.g., boxing center) set in the common coordinate system of the shape data and design pattern data coincides with the reference point of the jig block 26 that is in the base material supporting state (e.g., jig center point = lens optical center point). Therefore, the decorative pattern 3 can be formed at an appropriate position that is matched to the three-dimensional curved surface shape while ensuring sufficient positional accuracy of the relative position with respect to the outer shape 2 of the spectacle lens.

The laser processing unit 27c preferably performs irradiation of the laser beam via a telecentric optical system. The telecentric optical system is an optical system configured so that a chief ray is parallel to an optical axis. By using the telecentric optical system, the irradiation of the laser beam can be performed along the optical axis direction of the uncut lens 1, and this is extremely suitable for accurately reproducing the processing accuracy based on the design pattern data, for the surface (optical surface) to be treated of the uncut lens 1, which is a three-dimensional curved surface.

After the laser processing unit 27c forms the decorative pattern 3 by irradiation of the laser beam, the shape processing unit 28 performs edging processing (frame cutting processing) on the uncut lens 1 (S208). Thereby, the uncut lens 1 is processed to have an outer shape that corresponds to the outer shape 2 of a spectacle lens.

At this time, the shape processing unit 28 performs edging processing while maintaining the base material supporting state by the jig block 26. That is, the shape processing unit 28 performs edging processing on the uncut lens 1 while the uncut lens 1 remains positioned and fixed to the jig block 26, similarly to when measuring the three-dimensional shape by the three-dimensional measuring unit 27a and when performing irradiation of the laser beam by the laser processing unit 27c. Therefore, there is no deviation in the positional relationship between the uncut lens 1 and the jig block 26 in the three-dimensional shape measurement by the three-dimensional measuring unit 27a, the laser beam irradiation by the laser processing unit 27c, and the edging processing by the shape processing unit 28.

Further, the shape processing unit 28 performs edging processing on the uncut lens 1 based on the shape data obtained by the data receiving unit 23. That is, based on the shape data, the shape processing unit 28 performs edging processing on the uncut lens 1 in accordance with position control based on the shape data so that the shape of the uncut lens 1 corresponds to the outer shape 2 of the spectacle lens.

The shape processing unit 28 performs position control based on such shape data while the reference point (e.g., the boxing center) set in the common coordinate system of the shape data and the design pattern data coincides with the reference point of the jig block 26 that is in the base material supporting state (e.g., jig center point = lens optical center point). Therefore, the outer shape 2 obtained by the edging processing by the shape processing unit 28 has the decorative pattern 3 arranged at an appropriate position within the range of the outer shape 2, and the positional accuracy of the relative position with respect to the decorative pattern 3 is sufficiently ensured.

The edging processing by the shape processing unit 28 does not necessarily have to be performed after the formation of the decorative pattern 3 by the laser processing unit 27c, and may be performed before the formation of the decorative pattern 3 by the laser processing unit 27c.

That is, in this specification, providing the step of forming the decorative pattern 3 and the step of edging the outer shape 2 means that both of these steps are performed, regardless of the order in which they are performed. Therefore, in addition to the case where the step of forming the outer shape 2 is performed after the step of forming the decorative pattern 3, this also includes the case where the step of forming the decorative pattern 3 is performed after the step of forming the outer shape 2.

However, as described in this embodiment, when the edging processing is performed after the decorative pattern 3 is formed, it is possible to omit the lens cleaning that is performed between each step, unlike when the decorative pattern 3 is formed after the edging processing, which is preferable from the viewpoint of processing efficiency (productivity). In any one of the above cases, it is preferable to maintain the base material supporting state by the jig block 26 until the formation of the decorative pattern 3 and the edging of the outer shape 2 are completed. In this way, when the decorative pattern 3 is formed and the outer shape 2 is edged while maintaining the supporting state of the uncut lens 1 by the jig block 26, the relative positional accuracy of each can be ensured to a sufficient degree.

Further, when forming the decorative pattern 3 and performing edging processing on the outer shape 2, position control for forming the decorative pattern 2 and position control for performing edging processing are performed while the reference point set in the common coordinate system of the shape data and the design pattern data coincides with the reference point of the jig block 26 that is in the base material supporting state. This also ensures sufficient relative positional accuracy between the decorative pattern 3 and the outer shape 2.

These are very advantageous in arranging the decorative pattern 3 at a predetermined position within the outer shape 2 of the spectacle lens. For example, in the case where the decorative pattern 3 is a pattern figure 3b that follows the rim of the spectacle frame (see FIG. 1) or a pattern figure 3b that imitates the rim of a rimless lens, if there is a misalignment in the relative position of the pattern figure 3b with respect to the outer shape 2 of the spectacle lens, the misalignment becomes noticeable and impairs the appearance. This will result in a decrease in the quality and commercial value of the spectacle lens having the decorative pattern 3. Further, for example, even when the decorative pattern 3 is a sign 3a, a one-point design, an icon figure 3c, or the like (see FIG. 1), if the decorative pattern 3 is misaligned with a predetermined position within the outer shape 2 of the spectacle lens, there is a risk that a spectacle wearer's clear vision area may be adversely affected, resulting in decreasing the quality and commercial value of the spectacle lens having the decorative pattern 3.

That is, when arranging the decorative pattern 3 at a predetermined position within the range of the outer shape 2 of the spectacle lens, it is very important to ensure sufficient relative positional accuracy of the decorative pattern 3 with respect to the outer shape 2 of the spectacle lens, and by ensuring the positional accuracy, the decrease in the quality and commercial value of the spectacle lens having the decorative pattern 3 can be prevented.

In this embodiment, the decorative pattern 3 is formed and the outer shape 2 is edged using the above-described method and procedure, and therefore when the decorative pattern 3 is arranged at a predetermined position within the outer shape 2 of the spectacle lens, for example, the following positional accuracy is realized at the specified position (specifically, the relative positional accuracy of the decorative pattern 3 with respect to the outer shape 2): a positional accuracy with an allowable error of ±500 µm or less, preferably a positional accuracy of ±100 µm or less, more preferably a positional accuracy with an allowable error of ±75 µm or less, and even more preferably a positional accuracy with an allowable error of ±50 µm or less. Particularly, in a pseudo-rim design in which the decorative pattern 3 is arranged near the outer edge of the lens, along the rim, as part of the rim, or in place of the rim, it is desirable to strictly control a shape accuracy (curvature of a curved part, etc.) and positional accuracy of the decorative pattern 3 formed on the lens.

After the decorative pattern 3 is formed and the outer shape 2 is edged, the uncut lens 1 (i.e., the spectacle lens having the decorative pattern 3) after processing is removed from the jig block 26 (deblocking) (S210). Then, the removed spectacle lens is cleaned as needed to remove any processing residues or adhering matter (foreign matter), and a final lens appearance inspection is performed, after which the lens is fitted into a spectacle frame selected by a spectacle wearer (assembly of spectacles) (S211), thus completing the manufacture of the spectacle lens.

### (4) Effect of this embodiment

According to this embodiment, one or more of the following effects can be obtained.
(a) In this embodiment, in the manufacture of the spectacle lens, position control for forming the decorative pattern 2 and position control for edging the outer shape 2 of the spectacle lens are performed while the reference point set in the common coordinate system of the shape data and the design pattern data coincides with the reference point of the jig block 26 that is in the substrate support state. Therefore, regardless of the shape of the outer shape 2 of the spectacle lens, the decorative pattern 3 can be arranged at an appropriate position on the optical surface of the spectacle lens (specifically, at a predetermined position within the outer shape 2).

Further, in this embodiment, the decorative pattern 3 is formed and the outer shape 2 is edged on the uncut lens 1 supported by the jig block 26, while maintaining the supporting state. Therefore, the relative positional accuracy for the formation of the decorative pattern 3 and the edging of the outer shape 2 can be ensured to a sufficient degree. That is, sufficient relative positional accuracy of the decorative pattern 3 with respect to the outer shape 2 of the spectacle lens can be ensured, and as a result, a decrease in the quality and commercial value of the spectacle lens having the decorative pattern 3 can be prevented.

Further, in this embodiment, the three-dimensional shape of the surface to be treated of the uncut lens 1 supported by the jig block 26 is measured, to form the decorative pattern 3 by irradiation of the laser beam while adjusting focus in accordance with the measurement result. Therefore, the decorative pattern 3 can be appropriately reflected on the surface to be treated (optical surface) of the uncut lens 1, which is a three-dimensional curved surface.

From the above, according to this embodiment, even when the surface to be treated (optical surface) of the uncut lens 1 is a three-dimensional curved surface, the decorative pattern 3 can be formed with high precision at an appropriate position on the optical surface.

(b) In this embodiment, in the manufacture of the spectacle lens, the decorative pattern 3 is positioned with respect to the outer shape 2 of the spectacle lens using the reference points set in a common coordinate system for the shape data and the design pattern data. Therefore, the relative positional accuracy of the decorative pattern 3 with respect to the outer shape 2 of the spectacle lens can be reliably ensured, which is very preferable for forming the decorative pattern 3 with high accuracy at a predetermined position within the outer shape 2.

(c) In this embodiment, in the manufacture of the spectacle lens, the decorative pattern 3 is formed on the surface to be treated of the uncut lens 1 by irradiating the surface to be treated with laser beam via the telecentric optical system. Therefore, by using the telecentric optical system, irradiation of the laser beam can be performed along the optical axis direction of the uncut lens 1, which is extremely suitable for accurately reproducing the processing accuracy based on the design pattern data on the surface (optical surface) to be treated of the uncut lens 1, which is a three-dimensional curved surface.

d) In this embodiment, in the manufacture of the spectacle lens, the decorative pattern 3 is formed on the surface to be treated of the uncut lens 1 by removing some layers of the multilayer optical film that constitutes the surface to be treated with laser beam, thereby marking the decorative pattern 3 on the surface to be treated. In this way, the decorative pattern 3 is formed by removing some layers of the optical film, which makes it possible to form the decorative pattern 3 while preventing the function of the optical film from being significantly impaired.

(e) In this embodiment, the decorative pattern 3 is formed on the surface to be treated of the uncut lens 1 by performing non-heating processing on the surface to be treated by irradiating it with short-pulse laser beam, thereby forming the decorative pattern 3. Therefore, due to a non-heating processing, there is little thermal impact on the surrounding area of the treated part, and thermal damage can be suppressed. That is, by performing the non-heating processing, the decorative pattern 3 can be formed while suppressing damage to the optical film on the surface to be treated of the uncut lens 1.

### (5) Modified example, etc.

Although embodiments of the present invention have been described above, the above disclosure presents exemplary embodiments of the present invention. That is, the technical scope of the present invention is not limited to the above-described exemplary embodiments, and various modifications are possible without departing from the spirit of the present invention.

The above-described embodiment shows a case where the optical member is the spectacle lens, but the present invention is not limited thereto. That is, the present invention can be applied in exactly the same way to optical members other than the spectacle lens.

The above-described embodiment shows a case where marking of the decorative pattern is performed by removing some layers of the multilayer optical film that constitutes the surface to be treated of the uncut lens 1 with laser beam, but the present invention is not limited thereto. That is, the layer to be removed for marking the decorative pattern is not limited to a specific layer, but may be any layer that can be treated appropriately depending on the configuration of the surface to be treated.

The above-described embodiment shows a case where marking of the decorative pattern is performed by non-heat processing using a short pulse laser, but the present invention is not limited thereto. That is, marking of the decorative pattern can be performed by other laser processing.

The above-described embodiment shows a case where the step of edging the outer shape 2 is performed after the step of forming the decorative pattern 3, but the present invention is not limited thereto, and the processing of forming the decorative pattern 3 may be performed after the processing of edging the outer shape 2.

### Description of signs and numerals

1...Uncut lens (base material), 2...Outer shape, 3...Decorative pattern, 11...Shape acquisition unit, 12...Data transmission unit, 13...Design selection unit, 14...Design transmission unit, 21...Data/design control unit, 22...Manufacturing unit, 23...Data receiving unit, 24...Design receiving unit, 25...Design drawing unit, 26...Jig block, 27...Pattern processing unit, 27a...Three-dimensional measuring unit, 27b...Data processing unit, 27c...Laser processing unit, 28...Shape processing unit

## Claims

1. An optical member manufacturing method, which is a method for manufacturing an optical member having a decorative pattern formed on an optical surface, the method comprising:
obtaining shape data that specifies an outer shape of the optical member and design pattern data that specifies a decorative pattern to be arranged within the outer shape;
measuring a three-dimensional shape of a surface to be treated of a base material that is a base of the optical member;
irradiating the surface to be treated of the base material with laser beam in accordance with position control based on the design pattern data while adjusting focus in accordance with a measurement result of the three-dimensional shape, thereby forming the decorative pattern on the surface to be treated; and
processing an outer shape of the base material in accordance with position control based on the shape data, thereby forming the base material into the outer shape of the optical member;
wherein the measurement of the three-dimensional shape of the base material, the formation of the decorative pattern, and the processing of the outer shape are performed while maintaining a base material supporting state by a jig block that supports the base material, and
position control for forming the decorative pattern and position control for processing the outer shape are performed while a reference point set in a common coordinate system of the shape data and the design pattern data coincides with a reference point of the jig block that is in the base material supporting state.

2. The optical member manufacturing method according to claim 1, wherein the reference point in the common coordinate system is used to position the decorative pattern with respect to the outer shape.

3. The optical member manufacturing method according to claim 1, wherein the surface to be treated is irradiated with laser beam via a telecentric optical system.

4. The optical member manufacturing method according to any one of claims 1 to 3, wherein the decorative pattern is formed by removing a part of a surface layer portion of the surface to be treated by irradiation of the laser beam.

5. The optical member manufacturing method according to claim 4, wherein the surface layer portion is composed of an optical film with a multilayer structure.

6. The optical member manufacturing method according to claim 4, wherein the decorative pattern is formed by non-heat processing using irradiation of a short pulse laser beam.

7. The optical member manufacturing method according to claim 1, wherein the optical member is a spectacle lens.

8. An optical member manufacturing system, which is an optical member manufacturing system used to manufacture an optical member having a decorative pattern formed on its optical surface, the system comprising:
a jig block that supports a base material that is a base of the optical member;
a data acquisition unit that obtains shape data that specifies an outer shape of the optical member and design pattern data that specifies the decorative pattern to be arranged within the outer shape;
a three-dimensional measuring unit that measures a three-dimensional shape of a surface to be treated of the base material;
a laser processing unit that irradiates the surface to be treated of the base material with laser beam in accordance with position control based on the design pattern data while adjusting focus in accordance with a measurement result of the three-dimensional shape, thereby forming the decorative pattern on the surface to be treated; and
a shape processing unit that processes an outer shape of the base material in accordance with the position control based on the shape data, thereby forming the base material into the outer shape of the optical member,
wherein the measurement of the three-dimensional shape of the base material, the formation of the decorative pattern, and the processing of the outer shape are performed while maintaining a base material supporting state by a jig block that supports the base material, and
position control for forming the decorative pattern and position control for processing the outer shape are performed while a reference point set in a common coordinate system of the shape data and the design pattern data coincides with a reference point of the jig block that is in the base material supporting state.
